# EUROPÄISCHE PATENTSCHRIFT

(11) **EP 2 976 403 B1**
(45) Veröffentlichungstag und Bekanntmachung des Hinweises auf die Patenterteilung: **16.08.2017**
(21) Anmeldenummer: 14709561.6
(22) Anmeldetag: 11.03.2014
(51) Int. Cl.: C09J 123/14, C09J 5/06

(54) **GEBRAUCHSFERTIGE HEISSSCHMELZKLEBEMASSE MIT VERBESSERTEM EIGENSCHAFTSPROFIL**
READY-TO-USE HOT MELT ADHESIVE HAVING AN IMPROVED PROPERTY PROFILE
ADHÉSIF THERMOFUSIBLE PRÊT À L'EMPLOI AYANT UN PROFIL DE PROPRIÉTÉS AMÉLIORÉ

(30) Priorität: 23.03.2013 DE 102013005089
(43) Veröffentlichungstag der Anmeldung: 27.01.2016
(73) Patentinhaber: Clariant International Ltd, 4132 Muttenz (CH)
(72) Erfinder: HERRLICH, Timo, 77815 Bühl (DE); STEIB, Christian, 86356 Steppach (DE); HERRMANN, Hans-Friedrich, 64521 Gross-Gerau (DE); LANG, Andreas, 82256 Fürstenfeldbruck (DE)
(74) Vertreter: Graser, Konstanze
(86) Internationale Anmeldenummer: PCT/EP2014/000648
(87) Internationale Veröffentlichungsnummer: WO 2014/154328

(56) Entgegenhaltungen:
- EP-A1- 1 645 608
- EP-A1- 1 788 054
- EP-A1- 1 788 055

## Beschreibung

Die Erfindung betrifft gebrauchsfertige Heißschmelzklebemassen mit verbessertem Eigenschaftsspektrum (Wärmeformbeständigkeit, Kohäsion, Adhäsion, low VOC, offene Zeit), bestehend aus Polyolefinwachsen, die mit Metallocenkatalysatoren hergestellt worden sind.

Heißschmelzklebemassen oder hot melts sind thermoplastische, bei Umgebungstemperatur feste Werkstoffe, die im schmelzflüssigen Zustand strang- oder schichtförmig auf geeignete Substratoberflächen appliziert werden und dort nach dem Erstarren unterschiedliche Funktionen ausüben. Sie sind vorzugsweise auf Basis von Harzen, Wachsen, thermoplastischen Kunststoffen und Elastomeren aufgebaut und enthalten gegebenenfalls Zusätze von Füllstoffen, Pigmenten und Additiven wie Stabilisatoren etc.

Beispielsweise können Heißschmelzklebemassen als lösemittelfreie Klebstoffe zum Verkleben eingesetzt werden. Derartige Schmelzkleber werden aufgrund ihrer vielseitigen Vorteile in zunehmendem Umfang u.a. in der Verpackungs-, Möbel-, Textil- und Schuhindustrie als wirtschaftliche und umweltfreundliche Alternative zu herkömmlichen, lösemittelbasierenden Klebstoffen eingesetzt. Bestandteile üblicher Schmelzkleber-Rezepturen sind polare oder unpolare Polymere - in der Regel Ethylen-Vinylacetat-Copolymere -, Harze sowie Wachse.

Die polaren oder unpolaren Polymere dienen dabei als Gerüstsubstanz. Sie sorgen für den kohäsiven Zusammenhalt der Klebemasse und tragen gleichzeitig zur Adhäsion zum Substrat bei. Der Harzzusatz verbessert die Adhäsionswirkung und kann auf die verschiedenen Kleberkomponenten gegebenenfalls einen verträglichkeitsvermittelnden Effekt ausüben. Wachse werden zur Modifizierung in Anteilen, bezogen auf die Schmelzklebermassen von in der Regel weniger als 10 Gew.-% eingesetzt. Sie regulieren wichtige physikalische Eigenschaften der Klebemassen wie etwa Härte, Schmelzviskosität und Erweichungspunkt und beeinflussen mit ihrer Wirkung auf offene Zeit, Adhäsion, Kohäsion etc. entscheidend das anwendungstechnische Verhalten. Bei Wachseinsatzmengen von mehr als 10 Gew.-% wurde bisher in der Regel eine Verschlechterung der Eigenschaften, insbesondere eine Verminderung der Klebkraft des Heißschmelzklebers gefunden.

Als Wachse werden in Heißschmelzklebemassen bisher makro- und mikrokristalline Paraffinwachse, Fischer-Tropsch-Wachse sowie Polyolefinwachse eingesetzt. Unter Polyolefinwachsen werden hier in Abgrenzung zu Kunststoffen solche Polyolefine verstanden, deren Schmelzviskosität bei 170 °C unterhalb von 40.000 mPa.s liegt.

Polyolefinwachse können durch thermischen Abbau verzweigter hochpolymerer Polyolefin-Kunststoffe oder durch direkte Polymerisation von Olefinen hergestellt werden. Als Polymerisationsverfahren kommen beispielsweise Hochdrucktechnologien in Frage, wobei die Olefine, in der Regel Ethylen, bei hohen Drücken und Temperaturen radikalisch zu verzweigten Wachsen umgesetzt werden. Daneben gibt es das Niederdruck- bzw. Zieglerverfahren, bei denen Ethylen und/oder höhere 1-Olefine mit Hilfe metallorganischer Katalysatoren bei vergleichsweise geringeren Drücken und Temperaturen polymerisiert werden.

Als Variante des Niederdruckverfahrens ist in neuerer Zeit eine Arbeitsweise bekannt geworden, bei der als metallorganische Katalysatoren Metallocenverbindungen Verwendung finden. Letztere enthalten Titan-, Zirkonium- oder Hafniumkomplexe als aktive Spezies und werden in der Regel in Kombination mit Cokatalysatoren, z. B. Organoaluminium- oder Borverbindungen, bevorzugt Aluminoxanverbindungen, eingesetzt. Die Polymerisation erfolgt bei Bedarf in Gegenwart von Wasserstoff als Molmassenregler. Metallocenverfahren zeichnen sich dadurch aus, dass im Vergleich zur älteren Zieglertechnologie Wachse mit engerer Molmassenverteilung, gleichmäßigem Comonomereinbau, definierter Taktizität (z. B. a-, iso-, syndio-, hemiiso- etc.) niedrigeren Schmelzpunkten und höherer Katalysatoreffektivität erhalten werden können.

Schmelzklebemischungen auf Basis oben genannter Komponenten (Polymer, Harz, Wachs, etc.), insbesondere auf Basis Metallocene-katalysierter Polyolefine sind bekannt und schon lange Stand der Technik. So werden beispielsweise in EP1631641 durch Metallocenekatalyse hergestellte Polyolefinwachse als Mindermengenkomponente in Schmelzklebermischungen, welche als weitere Bestandteile EVA-Polymere und Kohlenwasserstoffharze enthalten, eingesetzt. In EP1645608 sind Schmelzklebemischungen beschrieben, deren Gerüstsubstanz und somit mehr als 50 Gew.-% auf Basis eines per Metallocenverfahren hergestelltes Polyolefin-Copolymer bestehen, jedoch in den beschriebenen Ausführungsformen als weiteren Bestandteil Kohlenwasserstoffharze enthalten. In EP2081609 wird die Verwendung solcher Schmelzklebermischungen zum Verkleben von Textilfasern untereinander bzw. mit anderen glatten Substraten in Hygieneartikeln beschrieben.

Bekanntermaßen besteht zunehmend der Wunsch, Schmelzklebstoffe ohne vorherige Compoundierung der Einzelkomponenten zu erhalten. Dies impliziert, dass das Matrixmaterial die Funktionen von Harz, Wachs und Trägerpolymer in einem Stoff vereint. Dies ist wünschenswert sowohl aus Gründen der Vereinfachung der Herstellung (Komplexitätsreduktion) solcher Schmelzkleber, als auch unter dem Gesichtspunkt der Umwelt- und Klimaverträglichkeit durch Vermeidung unnötiger energieintensiver Prozessschritte. EP1645608B1 impliziert zwar mit einem Polyolefinwachsanteil von > 50 Gew.% auch Heißschmelzklebemassen, die ausschließlich als Einkomponentensysteme aufgebaut sind, jedoch ist eine geeignete einkomponentige Ausführungsform weder beschrieben noch gibt die Patentschrift dem Fachmann Hinweise ein solches eigenschaftsübergreifendes Polyolefinwachs herzustellen und entsprechend auszuwählen, noch den Adhäsionsverlust durch Weglassen eines Harzes in bester Weise zu kompensieren.

Es wurde überraschend gefunden, dass eine gebrauchsfertige Heißschmelzmasse ausschließlich bestehend aus reaktorfertigen Polyolefinwachsen, welche mit Hilfe von Metallocenkatalysatoren hergestellt wurden, die eine zahlenmittlere Molmasse von 15.000 - 25.000 g/mol und eine gewichtsmittlere Molmasse von 25.000 bis 35.000 g/mol, einen Tropf- oder Erweichungspunkt Ring/Kugel zwischen 100 und 120 °C, eine Schmelzviskosität, gemessen bei einer Temperatur von 170 °C, zwischen 8000 und 15.000 mPa.s, eine Glasübergangstemperatur von maximal -15 °C aufweisen und eine Oberflächenspannung bei 170 °C von maximal 23 mN/m aufweisen, sich in besonders vorteilhafter Weise als einkomponentige Heißschmelzkleber eignen. Derartige einkomponentige Heißschmelzkleber bedürfen keiner weiteren energieintensiven Compoundierung, zeichnen sich innerhalb der Polyolefinwachse durch eine verbesserte Kohäsion, verringerte offene Zeit, verbesserte Wärmeformbeständigkeit und Kälteflexibilität und damit einem breiteren Anwendungsspektrum aus. Derartige einkomponentige Heißschmelzkleber eignen sich damit in besonderem Maße zum Verkleben und Laminieren von Textilflächengebilden (Teppichen, Matratzenbezügen, Federkerntaschen) und insbesondere beim Verkleben von "low surface energy" Substraten (z. B. PE, PP, etc.). Es wurde außerdem gefunden, dass derartige einkomponentige Heißschmelzkleber einen besonders geringen Anteil volatiler organischer Verbindungen aufweisen (low VOC).

### Beschreibung

Gegenstand der Erfindung sind daher gebrauchsfertige Heißschmelzklebemassen gemäß Anspruch 1, enthaltend mindestens 95 Gew.-% eines oder mehrerer Polyolefinwachse, die mit Hilfe von Metallocenkatalysatoren hergestellt wurden, wobei das Polyolefincopolymerwachs aus Propylen und einem oder mehreren weiteren Monomeren ausgewählt aus Ethylen und verzweigten oder unverzweigten 1-Alkenen mit 4 bis 20 C-Atomen besteht und der Gehalt an Struktureinheiten hervorgegangen aus Propylen in den Copolymerwachsen 80 bis 99,9 Gew.-% beträgt, und die Heißschmelzklebemasse eine Oberflächenspannung der Schmelze, gemessen bei einer Temperatur von 170 °C, von maximal 23 mN/m aufweist.

Der Terminus "gebrauchsfertig" bedeutet in diesem Zusammenhang, dass ein dem Polymerisationsverfahren der erfindungsgemäßen Polyolefinwachse separat nachgestellter Compoundierschritt zum Mischen mit anderen Materialkomponenten wie z.B. Mischen mit Harz, Trägerpolymer oder Wachs explizit ausgeschlossen wird. Eine übliche Additivierung mit Mindermengenkomponenten bis zu maximal 5 Gew.-%, bevorzugt bis zu maximal 2 Gew.-%, besonders bevorzugt maximal 0,5 Gew.-%., solange dies in Verbindung mit der Formgebung (Konfektionierung) nach dem Polymerisationsverfahren geschieht, wird hingegen nicht ausgeschlossen. Der Terminus "einkomponentig" bezieht sich hier auf die Materialklasse Polyolefinwachse und impliziert somit z. B. auch Reaktorblends unterschiedlicher Polyolefinwachse, wohingegen Mischungen aus EVA und Polyolefinwachs bzw. Harz und Polyolefinwachs als nicht erfindungsgemäße Multikomponentensysteme zu verstehen sind.

Als in den erfindungsgemäßen gebrauchsfertigen Heißschmelzklebemassen enthaltene Polyolefinwachse kommen beispielsweise Copolymerisate des Propylens mit Ethylen und/oder mit höheren 1-Olefinen oder deren Copolymerisate untereinander in Frage. Als höhere 1-Olefine werden vorzugsweise lineare oder verzweigte Olefine mit 4 bis 20 C-Atomen und vorzugsweise mit 4 bis 6 C-Atomen, eingesetzt. Beispiele hierfür sind 1-Buten, 1-Hexen, 1-Octen oder 1-Octadecen. Die Copolymeren bestehen zu 85 bis 95 Gew.-% aus Propylen.

In einer bevorzugten Ausführungsform bestehen die Copolymerisate der erfindungsgemäßen gebrauchsfertigen Heißschmelzklebemassen aus 85 bis 95 Gew.-% Propylen und 5 - 15 Gew.-% Ethylen.

Bevorzugt haben erfindungsgemäß eingesetzten Copolymerisate der erfindungsgemäßen gebrauchsfertigen Heißschmelzklebemassen eine Oberflächenspannung der Schmelze, gemessen bei einer Temperatur von 170 °C, von maximal 23 mN/m, bevorzugt von maximal 22,5 mN/m.

Die in den erfindungsgemäßen gebrauchsfertigen Heißschmelzklebemassen enthaltenen Polyolefinwachse weisen vorzugsweise eine zahlenmittlere Molmasse Mₙ zwischen 15.000 und 25.000 g/mol, besonders bevorzugt zwischen 17.000 und 25.000 und 35.000 g/mol, besonders bevorzugt zwischen 28.000 und 32.000 g/mol auf.

Die in den erfindungsgemäßen gebrauchsfertigen Heißschmelzklebemassen enthaltenen Polyolefinwachse weisen einen Tropf- oder Erweichungspunkt Ring/Kugel zwischen 100 und 120 °C, bevorzugt zwischen 110 und 120 °C eine Schmelzwärme von 0 bis 60 J/g, bevorzugt zwischen 40 und 60 J/g eine Schmelzviskosität, gemessen bei einer Temperatur von 170 °C, zwischen 8000 und 15.000 mPa.s, bevorzugt zwischen 8000 und 11.000 mPa.s und eine Glasübergangstemperatur (DSC) von maximal -15 °C, bevorzugt maximal -20 °C auf.

Für die Herstellung der erfindungsgemäß verwendeten Polyolefinwachse werden Metallocenverbindungen der Formel (I) eingesetzt.

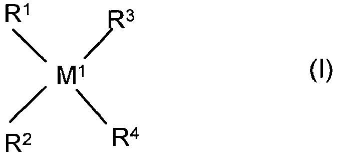

Diese Formel umfasst auch Verbindungen der Formel (la), 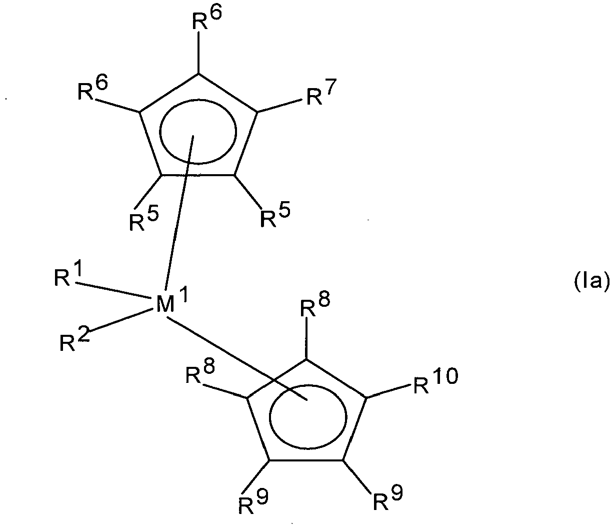 der Formel (Ib) 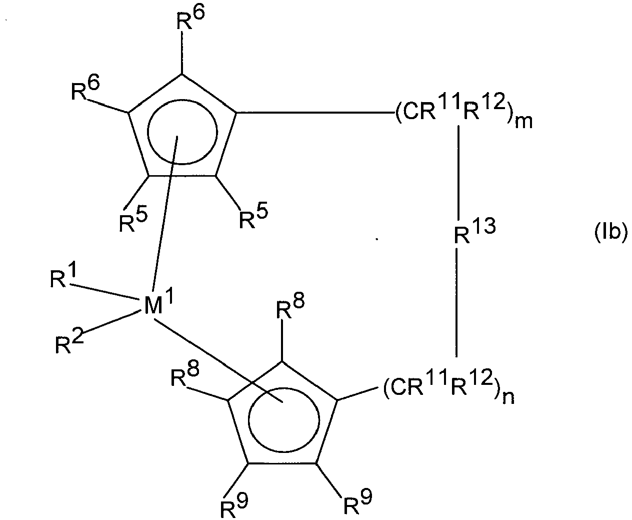 und der Formel (Ic)

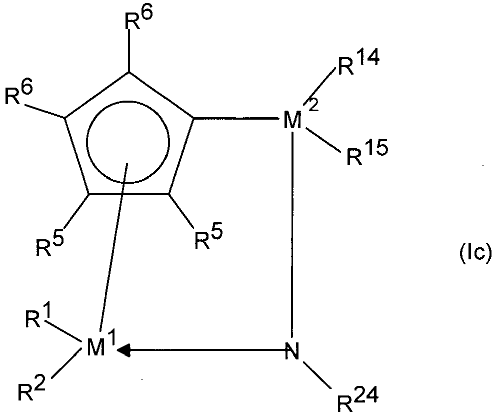

In den Formeln (I), (Ia) und (Ib) ist M¹ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium, Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁-, vorzugsweise C₆-C₈-Arylgruppe, eine C₁-C₁₀-, vorzugsweise C₁-C₃-Alkoxygruppe, einen -NR¹⁶₂-,
-SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 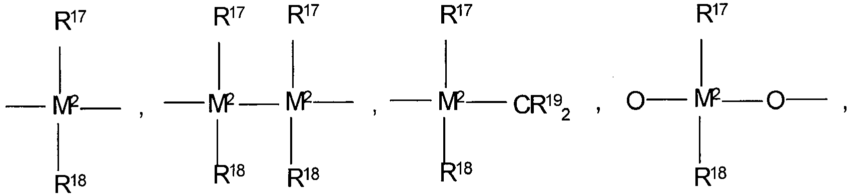 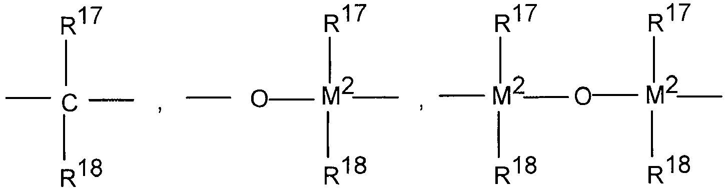 =BR¹⁷, =AIR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel (I) sind aluminiumorganische Verbindungen, insbesondere Alumoxane oder auch alumihiumfreie Systeme wie R²⁰xNH₄₋ₓBR²¹₄, R²⁰xPH₄₋ₓBR²¹₄, R²⁰₃CBR²¹₄ oder BR²¹3. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Zusätzlich ist häufig eine dritte Komponente erforderlich, um einen Schutz von polaren Katalysator-Giften aufrechtzuerhalten. Hierzu sind aluminiumorganische Verbindung wie z. B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Bei oben beschriebenen Verfahren ist auch der Einsatz von Mischungen unterschiedlich stereoselektiv und/oder unterschiedlich aktiven Einzentren-Katalysatoren in geträgerter sowie ungeträgerter Form möglich. Die bei einer solchen Verfahrensvariante hergestellten Produkte bezeichnet man als Reaktorblends. Die bei dieser Verfahrensvariante erhaltenen Polymerisate sind aufgrund der gleichen Monomerbausteine als einheitliche Materialklasse und somit als einkomponentig anzusehen. Die erfindungsgemäßen Polyolefinwachse umschließen daher auch Reaktorblends. In der vorliegenden Erfindung sind das Metallocen-basierende Polyolefinwachse, insbesondere z. B. Ethylen-Propylen-Copolymere.

Die mit oben beschriebenen Verfahren hergestellten Ethylen-Propylen-basierten Copolymerwachse weisen ein für die erfindungsgemäßen gebrauchsfertigen Heißschmelzklebemassen besonders vorteilhaftes Eigenschaftsprofil auf. Zum vorteilhaften Eigenschaftsprofil gehören: Hohe Kohäsion, ohne in der Anwendung spröde zu sein; Ein breites Temperatur-Anwendungsspektrum, begrenzt durch Glasübergangstemperatur nach unten und Erweichungstemperatur nach oben; Eine Schmelzoberflächenspannung bei 170 °C < 23 mN/m für eine verbesserte Benetzung, insbesondere von "low-surface energy" Oberflächen, wie z. B. Polyolefinoberflächen; Eine kurze offene Zeit, für hohe Verarbeitungsgeschwindigkeiten.

Gegenstand vorliegender Erfindung sind daher gebrauchsfertige einkomponentige Heißschmelzklebemassen auf Basis von metallocenkatalytisch hergestellten Polyolefinwachsen. Bevorzugt entspricht die gebrauchsfertige einkomponentige Heißschmelzklebemasse in ihren physikalischen und chemischen Eigenschaften exakt dem Polyolefinwachs bzw. dem Polyolefinwachsreaktorblend.

Besonders bevorzugt weisen die erfindungsgemäßen gebrauchsfertigen Heißschmelzklebemassen einen Tropf- oder Erweichungspunkt Ring/Kugel zwischen 110 und 120 °C, eine Schmelzviskosität, gemessen bei einer Temperatur von 170 °C, zwischen 8000 und 11.000 mPa.s, eine Glasübergangstemperatur (DSC) von maximal -20 °C sowie eine Oberflächenspannung der Schmelze, gemessen bei deiner Temperatur von 170 °C, von maximal 23 mN/m auf.

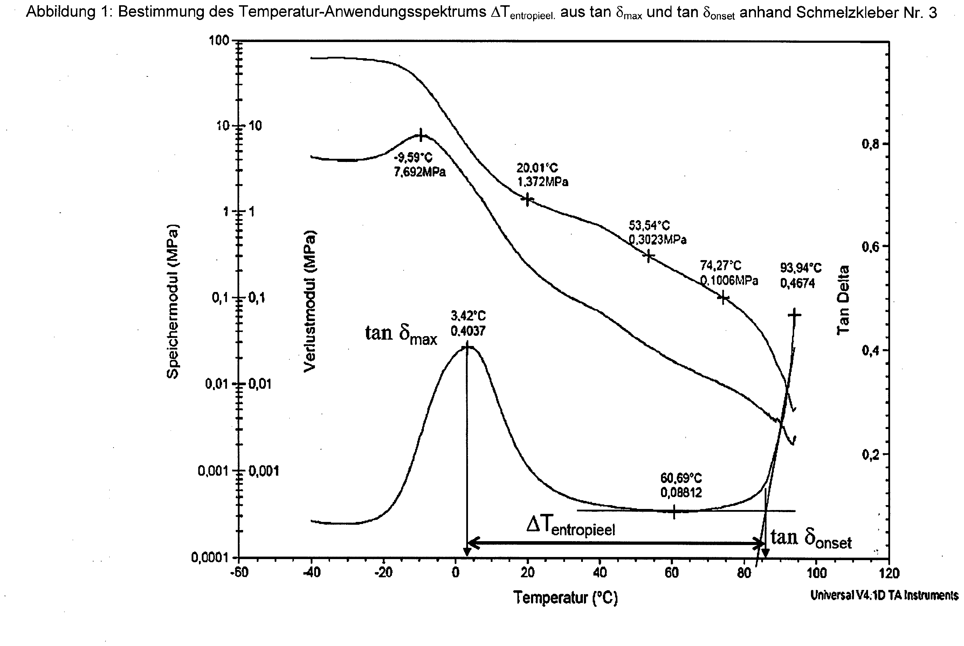

Erfindungsgemäß zeichnen sich die gebrauchsfertigen Heißschmelzklebemassen durch ein im Vergleich zu EVA basierte Schmelzkleber besonders breites Temperatur-Anwendungsspektrum aus. Dies drückt sich für die gebrauchsfertigen Heißschmelzklebemassen durch einen entropieelastischen Bereich von 80 bis 110 °C aus. Bestimmt wird der entropieelastische Bereich ΔTₑₙₜᵣₒₚᵢₑₑₗ (tan δ) aus der Differenz des Maximum des Verlustfaktors tan δₘₐₓ und dem Erweichungspunkt in der DMA (Onset des Verlustfaktors tan δₒₙₛₑₜ). Gemessen wird der Verlauf des Verlustmoduls mittels DMA-Messung nach DIN ISO 6721-1. Das Maximum des Verlustfaktors tan δₘₐₓ ermittelt sich nach ASTM D 4065-99 während der Onset des Verlustfaktors am Erweichungspunkt über die Tangentenmethode ermittelt wird (siehe Abbildung 1).

Die erfindungsgemäßen gebrauchsfertigen Heißschmelzklebemassen können zusätzlich Polyolefin-Kunststoffe, Harze, Wachse, Weichmacher, polare oder unpolare Polymere, Pigmente, Füllstoffe, Stabilisatoren und/oder Antioxidantien in üblichen Additivkonzentrationen enthalten.

Weiterer Gegenstand der Erfindung ist die Verwendung der erfindungsgemäßen gebrauchsfertigen Heißschmelzklebemassen als Schmelzkleber. Vorzugsweise bestehen die gebrauchsfertigen Heißschmelzklebemassen zu 95 bis 100 Gew.-%, bevorzugt zu 98 bis 100 Gew.-%, besonders bevorzugt zu 99 bis 100 Gew.-% aus den oben beschriebenen Polyolefinwachsen.

Die erfindungsgemäße gebrauchsfertige Heißschmelzklebemasse findet Verwendung beim Verkleben, Laminieren, Fixieren und Beschichten von Textilflächengebilden jeglicher Art, wie z. B. Teppichrückseitenbeschichtung, Kunstrasenrückseitenbeschichtung, Verkleben von Federkerntaschen (Matratzen), Nonwoven oder von Vliesmaterialien. Die erfindungsgemäße gebrauchsfertige Heißschmelzklebemasse eignet sich auch zur Herstellung verschiedenster Hygieneartikel, wie Babywindeln, Höschenwindeln, Inkontinenzprodukten, Einlagen, Binden, insbesondere zum Laminieren von Fasermaterialien wie Vliesmaterialien mit Folie.

Aufgrund der verbesserten mechanischen Eigenschaften kann die erfindungsgemäße gebrauchsfertige Heißschmelzklebemasse auch als Bindemittel für die Herstellung von Straßenbelägen verwendet werden.

Besonders vorteilhaft eignet sich die erfindungsgemäße gebrauchsfertige Heißschmelzklebemasse zum Verkleben, Laminieren und Fixieren von Substraten mit einer Gesamtoberflächenenergie von γ_{ges} < 30 mN/m, sogenannte "low surface energy" Substrate. Dazu zählen insbesondere Polypropylen, Polyethylen. Bevorzugt weisen solche Substrate einen niedrigen polaren Anteil γₚ < 2 mN/m der Gesamtoberflächenenergie auf. Letztere ergibt sich aus Summe der polaren und dispersen Oberflächenenergieanteile: γ_{ges}=γₚ+γ_{d}

Die nachfolgenden Beispiele sollen die Erfindung näher erläutern, ohne sie jedoch darauf zu beschränken.

### Beispiele

Die Schmelzviskositäten wurden nach DIN 53019 mit einem Rotationsviskosimeter, die Tropfpunkte nach DIN 51801/2, die Erweichungspunkte Ring/Kugel nach DIN EN 1427 bestimmt. Die Glasübergangstemperaturen sowie die Schmelzenthalpien wurden mit Hilfe der Differentialthermoanalyse nach DIN EN ISO 11357-1 von -50 bis 200 °C bei einer Heizrate von 10K/min unter Stickstoff bestimmt.

Das Molmassengewichtsmittel M_{w}, das Molmassenzahlenmittel Mₙ und der resultierende Quotient Mₙ/M_{w} (PDI) wurden durch
Gelpermeationschromatographie bei 135 °C in 1,2-Dichlorbenzol anhand eines PP-Standards ermittelt.

Die Bestimmung der Oberflächenspannung der Heißschmelzklebemassen bzw. der Polyolefinwachse erfolgte mittels der Methode des "hängenden Tropfens" mittels einer beheizten Messkammer sowie einer beheizten Keramikkanüle bei 170 °C. Die für diese Messung notwendigen Schmelzdichten wurden ebenfalls bei 170 °C bestimmt.

Die Volatilität wurde thermogravimetrisch über TGA-Messungen unter Stickstoff bestimmt. Dazu wurden ca. 10 mg Probe mit einer Heizrate von 5 K/min auf 300 °C erhitzt und der Masseverlust registriert. Die Messung erfolgte unter Stickstoffatmosphäre mit einem N₂-Durchfluss von 50 ml/min.

Die in Tabelle 1 aufgeführten Metallocen-Polyolefinwachse wurden nach dem in EP-A-0 571 882 angegebenen Verfahren hergestellt. Die Regelung des Molekulargewichts bei gegebenem Katalysatorsystem und gegebenem Comonomerverhältnis erfolgte über den Wasserstoffpartialdruck als Molmassenregler.

Die Beispiele 1-13 zeigen eine Auswahl typischer Ethylen-Propylen basierter Copolymerwachse und deren Eigenschaftsprofil (Schmelzviskosität, EWP, Oberflächenspannung, Schmelzenthalpie, Glasübergangstemperatur), sortiert nach aufsteigender Erweichungstemperatur. Die Erweichungstemperatur hat in der späteren Anwendung als Schmelzkleber einen direkten Einfluss auf die Wärmeformbeständigkeit und damit die maximale Gebrauchstemperatur nach erfolgter Verklebung. Die Glasübergangstemperatur hat direkten Einfluss auf die Kälteflexibiltät einer Verklebung. Daneben begrenzt die Schmelzenthalpie (als Maß für die Kristallinität) die Zähigkeit und Kohäsion des Klebestoffs nach einer Verklebung. Schmelzviskosität und Schmelzoberflächenspannung sind hingegen erheblich für die Applizierbarkeit des flüssigen Schmelzklebers. Eine niedrige Oberflächenspannung führt dabei zu einer besseren Benetzung der Oberfläche. Die Beispiele 5, 6, 9, 10 und 11 zeigen bei konstantem Propylengehalt von 89 Gew.-% und 11 Gew.-% Ethylen, eine Veränderung des Eigenschaftsprofils mit steigendem Molekulargewicht. Das Molekulargewicht wurde dabei über den Wasserstoffpartialdruck während der Polymerisation gesteuert. So führt die Zunahme des Molekulargewichts zu einer Zunahme der Schmelzviskosität, des Erweichungspunkts, der Kristallinität in Form der Schmelzenthalpie, der Oberflächenspannung der Schmelze. Gleichzeitig nimmt die Volatilität mit steigendem Molekulargewicht ab.

**Tabelle 1: Eigenschaften verschiedener Ethylen-Propylen Polyolefin-Copolymerwachse**

| Beispiel Nr. | Gehalt Propylen | EWP | Schmelzwärme DSC | M_{w} | Mₙ | PDI | Schmelzviskosität 170 °C | Glasübergangstemperatur DSC | Oberflächenspannung 170°C | Volatilität TGA |
|---|---|---|---|---|---|---|---|---|---|---|
| | [Gew.%] | [°C] | [J/g] | [g/mol] | [g/mol] | | [mPas] | [°C] | [mN/m] | [%@300°C] |
| 1 (Vgl.) | 90 | 86 | 31 | 22100 | 13300 | 1,7 | 1800 | -28 | 21,6 | 0,5 |
| 2 (Vgl.) | 91 | 88 | 30 | 29700 | 18500 | 1,6 | 7000 | -26 | 23,1 | 0,1 |
| 3 (Vgl.) | 90 | 90 | 36 | 8700 | 6000 | 1,5 | 200 | -30 | 20,8 | 0,7 |
| 4 (Vgl.) | | 99 | 52 | 22300 | 13100 | 1,7 | 1500 | -24 | 21,5 | 0,5 |
| 5 (Vgl.) | 89 | 100 | 46 | 29700 | 17900 | 1,7 | 6300 | -24 | 22,5 | 0,2 |
| 6 (Vgl.) | 89 | 103 | 44 | 26300 | 14600 | 1,8 | 7800 | -21 | 21,8 | 0,5 |
| 7 (Vgl.) | | 107 | | 8800 | 5200 | 1,7 | 1300 | n.b. | n.b. | n.b. |
| 8 (Vgl.) | | 108 | 44 | 19800 | 7900 | 2,5 | 2300 | n.b. | 22,9 | n.b. |
| 9 (Erf.) | 89 | 117 | 54 | 30800 | 20700 | 1,5 | 8900 | -20 | 21,9 | 0,1 |
| 10 (Vgl.) | 89 | 120 | 64 | 32300 | 21700 | 1,5 | 9200 | -20 | 22,2 | 0,2 |
| 11 (Vgl.) | 89 | 135 | 77 | 35300 | 22800 | 1,5 | 9500 | | n.b | 0,1 |
| 12 (Vgl.) | | | 48 | | | | 60 | -25 | n.b. | 1,1 |
| 13 (Vgl.) | 100 | 145 | 108 | 7200 | 4600 | 1,6 | 60 | n.a. | 19,5 | 2,6 |

| | | | | | | | | | | |
|---|---|---|---|---|---|---|---|---|---|---|
| n.b. nicht bestimmt n.a. nicht bestimmbar EWP: Erweichungspunkt | | | | | | | | | | |

Nachfolgend soll gezeigt werden, dass das erfindungsgemäße Ethylen-Propylen Copolymerwachs (Tabelle 1, Beispiel Nr. 9) die anwendungstechnischen Anforderungen eines gebrauchsfertigen Schmelzklebers (Tabelle 2, Beispiele 5 und 9) im erfindungsgemäßen Sinn in besonderer geeigneter Weise gerecht wird (Tabelle 3, Beispiele 5 und 9).

### A. Verwendung in Schmelzkleber-Rezepturen

Unter Verwendung der in Tabelle 1 aufgeführten Wachse wurden Schmelzklebermassen gemäß den in Tabelle 2 aufgeführten Mischungsverhältnissen hergestellt. Die Komponenten wurden gemeinsam aufgeschmolzen und 1 h bei 180 °C gerührt.

Zur Prüfung der Kohäsion wurden aus den Mischungen gemäß DIN 53455 Formkörper vergossen und deren mechanische Stabilität im Zugversuch geprüft. Das Temperatur-Anwendungsspektrum wurde über den entropieelastischen Bereich ΔTₑₙₜᵣₒₚᵢₑₑₗ (tan δ) ermittelt und ergibt sich aus der Differenz des Maximum des Verlustfaktors (tan δₘₐₓ) und dem Onset des Verlustfaktors (tan δₒₙₛₑₜ): ΔTₑₙₜᵣₒₚᵢₑₑₗ = T(tan δₒₙₛₑₜ) - T(tan δₘₐₓ). Die Bestimmung des Verlustfaktors erfolgte mittels DMA-Messung nach DIN ISO 6721-1. Das Maximum des Verlustfaktors (tan δₘₐₓ) wurde nach ASTM D 4065-99 ermittelt, während der Onset des Verlustfaktors am Erweichungspunkt über die Tangentenmethode bestimmt wurde (siehe Abbildung 1). Die Heizrate der DMA-Messung betrug 3 K/min, die Amplitude 20 µm und die Messfrequenz 1 Hz. Die Probekörpergeometrie betrug stets 2 mm x 3,5 mm x 12,82 mm.

Die Bestimmung der offenen Zeit erfolgte nach Aufschmelzen der in Tabelle 2 aufgeführten Schmelzklebermassen bei 140 °C, anhand eines 500 µm gerackelten Schmelzfilms auf einer unbeschichteten Kartonoberfläche. Dazu wurden im Sekundentakt Papierstreifen (1 cm x 5 cm) auf den sich abkühlenden Schmelzfilm angedrückt. Nach vollständigem Aushärten des Schmelzklebstoffs werden die Papierstreifen abgezogen. Beim Ausbleiben eines vollständigen Faserausrisses an der Klebestelle ist das Ende der offenen Zeit erreicht. Die anwendungsrelevante Bestimmung der maximalen Zugkraft (pull strength) der Verklebung zwischen zwei Taschen einer Taschenfederkernmatratze und damit der Adhäsion erfolgte anhand maschinell verklebter Federkerntaschen durch einen Zugversuch in Analogie zu ASTM D751. Dazu wurde eine Fläche von 10 cm x 10 cm der verklebten Taschen an der Klebfläche ausgeschnitten und unter Zug vermessen. Das Taschenmaterial bestand aus einem Nonwoven auf Basis von PP.

**Tabelle 2: Schmelzkleber sowie Rezepturmischungen zur Anwendung**

| Schmelzkleber Nr. | Wachs Bsp. 1 [Gew.-%] | Wachs Bsp. 2 [Gew.-%] | Wachs Bsp. 5 [Gew.-%] | Wachs Bsp. 6 [Gew.-%] | Wachs Bsp. 9 (erf.) [Gew.-%] | Wachs Bsp. 10 [Gew.-%] | Elvax^{®} 220 [Gew.-%] | APAO [Gew.-%] | Harz [Gew.-%] | Licocene^{®} PE 4201 [Gew.-%] | EVA-Hotmelt Forbo |
|---|---|---|---|---|---|---|---|---|---|---|---|
| 1 (Vgl.) | 100 | - | - | - | - | - | - | - | - | - | - |
| 2 (Vgl.) | - | 100 | - | - | - | - | - | - | - | - | - |
| 3 (Vgl.) | - | - | 100 | - | - | - | - | - | - | - | - |
| 4 (Vgl.) | - | - | - | 100 | - | - | - | - | - | - | - |
| 5 (Erf.) | - | - | - | - | 100 | - | - | - | - | - | - |
| 6 (Vgl.) | - | - | - | - | - | 100 | - | - | - | - | - |
| 7 (Vgl.) | - | - | - | - | - | - | 100 | - | - | - | - |
| 8 (Vgl.) | - | - | - | - | - | - | - | 100 | - | - | - |
| 9 (Erf.) | - | - | - | - | 96 | - | - | - | 4 | - | - |
| 10 (Vgl.) | - | - | - | - | - | - | 96 | - | 4 | - | - |
| 11 (Vgl.) | - | - | 97 | - | - | - | - | - | - | 3 | - |
| 12 (Vgl.) | - | - | 94 | - | - | - | - | - | - | 6 | - |
| 13 (Vgl.) | - | - | - | - | - | - | - | - | - | - | 100 |

| | | | | | | | | | | | |
|---|---|---|---|---|---|---|---|---|---|---|---|
| Elvax^{®} 220: Ethylen-Vinylacetat-Copolymer, Hersteller Dupont AG Regalite^{®} 1140: Kohlenwasserstoffharz, Hersteller Eastman Licocene^{®} PE 4201: Polyethylene-Wachs Forbo: EVA-Hotmelt (bestehend aus Harz, EVA) n.b. nicht bestimmt n.a. nicht bestimmbar EWP: Erweichungspunkt | | | | | | | | | | | |

**Tabelle 3: Anwendungstechnisch relevante Eigenschaften von reaktorfertigen Schmelzklebern an den Beispielen: Verklebung der Taschen von Taschenfederkernmatratzen sowie der Rückseitenbeschichtung von Kunstrasen.**

| Schmelzkleber Nr. | | Schmelzviskosität 170 °C | Glasübergangstemperatur DSC | EWP | ΔTₑₙₜᵣₒₚᵢₑₑₗ (Temperatur-Anwendungs-spektrum) | Oberflächenspannung 170 °C | Kohäsion | Offene Zeit 140 °C | Zugfestigkeit zwischen 2 Taschen | Flexibilität beim Zusammenrollen eines beschichteten Kunstrasens |
|---|---|---|---|---|---|---|---|---|---|---|
| | | [mPas] | [°C] | [°C] | | [mN/m] | [N/mm²] | [s] | [N] | [qualitativ] |
| 1 (Vgl.) | E,P-Copolymer | 1800 | -28 | 86 | 88 | 21,6 | 3,2 | 50 | | bricht nicht |
| 2 (Vgl.) | E,P-Copolymer | 7000 | -26 | 88 | 83 | 23,1 | 4,9 | 70 | | bricht nicht |
| 3 (Vgl.) | E,P-Copolymer | 6300 | -24 | 100 | 82 | 22,5 | 9,3 | 35 | 77 | bricht nicht |
| 4 (Vgl.) | E,P-Copolymer | 7800 | -21 | 103 | 84 | 21,8 | 10,5 | 15 | | bricht nicht |
| 5 (Erf.) | E,P-Copolymer | 8900 | -20 | 117 | 101 | 21,9 | 16,7 | 5 | 88 | bricht nicht |
| 6 (Vgl.) | E,P-Copolymer | 9200 | -20 | 120 | 103 | 22,2 | 18,3 | 2 | | bricht |
| 7 (Vgl.) | EVA | >100000 | -34 | 70 | 76 | | 7,5 | 35 | | bricht nicht |
| 8 (Vgl.) | APAO | 4000 | -28 | +124 | 89 | | 1,0 | 18 | | bricht nicht |
| 9 (Erf.) | E,P-Copolymer +Harz | 9600 | -18 | 116 | 99 | | 16,4 | 7 | 89 | bricht nicht |
| 10 (Vgl.) | EVA+Harz | 93300 | -32 | 70 | 73 | | 7,4 | 55 | | bricht nicht |
| 11 (Vgl.) | E,P-Copolymer +Ethylen-Wachs | 5600 | -22 | 124 | 91 | 23,3 | 8,9 | 10 | | bricht nicht |
| 12 (Vgl.) | E,P-Copolymer +Ethylen-Wachs | 5000 | -21 | 126 | 3 | 22,9 | 7,4 | 5 | | bricht nicht |
| 13 (Vgl.) | EVA-Hotmelt | 4000 | | 83 | 49 | | | 6 | 76 | bricht nicht |

Die Schmelzkleber Nr. 5 und 9 erfüllen das erfindungsgemäße Eigenschaftsprofil eines gebrauchsfertigen Schmelzklebers mit einem im erfinderischen Sinne breiten Temperatur-Anwendungsspektrum einer kurzen offenen Zeit sowie einer hohen Kohäsion des Schmelzklebers. Aus der Schmelzoberflächenspannung < 23 mN/m bei 170 °C ergibt sich eine gute Benetzung der zu verklebenden Oberfläche. Die Vergleichsbeispiele 1 - 4, 6 - 8 sowie 10 - 13 erfüllen das erforderliche Eigenschaftsprofil in mindestens einer Eigenschaft (offene Zeit, Zähigkeit, Festigkeit, Flexibilität, Temperatur-Anwendungs-spektrum) nicht.

Die Beispiele für die Ethylen-Propylen Polyolefin-Copolymerwachse in Tabelle 1 und Tabelle 3 zeigen, dass eine Erhöhung des Erweichungspunkts und damit der Wärmeformbeständigkeit meist mit einer Erhöhung der Kristallinität und gleichzeitig mit dem Verlust der Flexibilität verbunden ist. Diesem Problem konnte bislang nur durch entsprechende Compoundierung begegnet werden. Schmelzkleber Nr. 5 zeigt auch ohne Compoundierung eine für die Anwendung optimale Eigenschaftskombination (Abbildung 1).

## Patentansprüche

1. Gebrauchsfertige Heißschmelzklebemasse enthaltend mindestens 95 Gew.-% eines oder mehrerer Polyolefincopolymerwachse, die mit Hilfe von Metallocenkatalysatoren hergestellt wurden, wobei das Polyolefincopolymerwachs aus Propylen und einem oder mehreren weiteren Monomeren ausgewählt aus Ethylen und verzweigten oder unverzweigten 1-Alkenen mit 4 bis 20 C-Atomen besteht und der Gehalt an Struktureinheiten hervorgegangen aus Propylen in den Copolymerwachsen 80 bis 99,9 Gew.-% beträgt, und die Heißschmelzklebemasse eine Oberflächenspannung der Schmelze, gemessen bei einer Temperatur von 170 °C, von maximal 23 mN/m aufweist, **dadurch gekennzeichnet, dass** das Polyolefincopolymerwachs
- Einheiten von Propylen und Ethylen enthält und
- der Gehalt an Struktureinheiten hervorgegangen aus Propylen zwischen 85 bis 95 Gew.-% liegt und
- das oder die Polyolefincopolymerwachse eine zahlenmittlere Molmasse Mₙ im Bereich von 15.000 und 25.000 g/mol und eine gewichtsmittlere Molmasse M_{w} im Bereich von 25.000 und 35.000 g/mol,
- einen Tropf- oder Erweichungspunkt Ring/Kugel im Bereich von 100 und 120 °C,
- eine Schmelzwärme von maximal 60 J/g, eine Schmelzviskosität, gemessen bei einer Temperatur von 170 °C, von 8.000 bis 15.000 mPa.s, und
- eine Glasübergangstemperatur von maximal -15 °C aufweisen,
und wobei die Heißschmelzklebemasse einen entropieelastischen Temperaturbereich ΔTₑₙₜᵣₒₚᵢₑₑₗ(tan δ), gemessen als Differenz aus Glasübergangtemperatur T_{g} (tan δₘₐₓ) aus Verlustfaktor und Erweichungstemperatur (Onset des Verlustmoduls tan δₒₙₛₑₜ) von 80 bis 110 °C und eine Schmelzwärme im Bereich von 40 bis 60 J/g, eine Schmelzviskosität, gemessen bei einer Temperatur von 170 °C, zwischen 8000 und 11.000 mPa.s, eine Glasübergangstemperatur von maximal -20 °C aufweist.

2. Gebrauchsfertige Heißschmelzklebemasse, gemäß Anspruch 1, **dadurch gekennzeichnet, dass** diese ohne weitere Compoundierung direkt im Polymerisationsreaktor hergestellt und bei Verwendung mehrerer verschiedener Polyolefinwachsen als Reaktorblend hergestellt wird.

3. Gebrauchsfertige Heißschmelzklebemasse, gemäß Anspruch 1 und/oder 2, **dadurch gekennzeichnet, dass** diese weiterhin eine oder mehrere Substanzen ausgewählt aus Polyolefin-Kunststoffen, Harzen, Wachsen, Weichmachern, polaren oder unpolaren Polymeren, Pigmenten, Füllstoffen, Stabilisatoren und Antioxidantien in Additivmengen enthält.

4. Verwendung der erfindungsgemäßen, gebrauchsfertigen Heißschmelzklebemasse, gemäß einem oder mehrerer vorhergehender Ansprüche 1 bis 3 zum Verkleben und Laminieren und Fixieren von "low surface energy" Substraten mit einer Oberflächenenergie von kleiner < 30 mN/m .

5. Verwendung nach Anspruch 4, **dadurch gekennzeichnet, dass** die Polyolefinwachse in den Heißschmelzklebemassen in Anteilen zwischen 95 und 100 Gew.-% enthalten sind.

6. Verwendung nach Anspruch 4 und/oder 5, **dadurch gekennzeichnet, dass** das Polyolefinwachs oder die Polyolefinwachse der gebrauchsfertigen Heißschmelzmasse entsprechen.

7. Verwendung, gemäß einem oder mehrerer vorhergehender Ansprüche 4 - 6, **dadurch gekennzeichnet, dass** diese als Bindemittel für die Herstellung von Straßenmarkierungen eingesetzt wird.

8. Verwendung, gemäß einem oder mehrere vorhergehender Ansprüche 4 - 7, als Schmelzkleber zur Rückseitenbeschichtung von Textilflächengebilden.

9. Verwendung gemäß einem oder mehrerer vorhergehender Ansprüche 4 - 8, **dadurch gekennzeichnet, dass** diese zum Verkleben, Laminieren, Fixieren und Beschichten von Textilflächengebilden (Teppichen, Kunstrasen, Matratzenbezügen, Federkerntaschen, Windeln, Nonwoven) eingesetzt wird.

## Claims

1. A ready-to-use hotmelt adhesive comprising at least 95 wt% of one or more polyolefin copolymer waxes produced using metallocene catalysts, where the polyolefin copolymer wax consists of propylene and one or more further monomers selected from ethylene and branched or unbranched 1-alkenes having 4 to 20 C atoms, the amount of structural units originating from propylene in the copolymer waxes is 80 to 99.9 wt%, and the hotmelt adhesive has a melt surface tension, measured at a temperature of 170°C, of not more than 23 mN/m, wherein the polyolefin copolymer wax
- comprises units of propylene and ethylene,
- and the amount of structural units originating from propylene is between 85 to 95 wt%, and
- the polyolefin copolymer wax or waxes have a number-average molar mass Mₙ in the range of 15 000 and 25 000 g/mol and a weight-average molar mass M_{w} in the range of 25 000 and 35 000 g/mol,
- a dropping point or ring & ball softening point in the range of 100 and 120°C,
- a heat of fusion of not more than 60 J/g, a melt viscosity, measured at a temperature of 170°C, of 8000 to 15 000 mPa.s, and
- a glass transition temperature of not more than -15°C,
and where the hotmelt adhesive has an entropy-elastic temperature range ΔT_{entropy-el} (tan δ), measured as the difference from glass transition temperature T_{g} (tan δₘₐₓ) from loss factor and softening temperature (onset of the loss modulus tan δₒₙₛₑₜ) of 80 to 110°C, and a heat of fusion in the range from 40 to 60 J/g, a melt viscosity, measured at a temperature of 170°C, of between 8000 and 11 000 mPa.s, and a glass transition temperature of not more than -20°C.

2. The ready-to-use hotmelt adhesive as claimed in claim 1, which is produced directly in the polymerization reactor without further compounding and, when two or more different polyolefin waxes are used, is produced as a reactor blend.

3. The ready-to-use hotmelt adhesive as claimed in claim 1 and or 2, which further comprises one or more substances selected from polyolefin polymers, resins, waxes, plasticizers, polar or apolar polymers, pigments, fillers, stabilizers, and antioxidants in additive amounts.

4. The use of the ready-to-use hotmelt adhesive of the invention, as claimed in one or more preceding claims 1 to 3 for bonding, laminating, and fixing low surface energy substrates, having a surface energy of less than < 30 mN/m.

5. The use as claimed in claim 4, wherein the polyolefin waxes are present in the hotmelt adhesives in fractions between 95 and 100 wt%.

6. The use as claimed in claim 4 and/or 5, wherein the polyolefin wax or the polyolefin waxes correspond to the ready-to-use hotmelt composition.

7. The use, as claimed in one or more preceding claims 4-6, wherein it is employed as a binder for the production of traffic markings.

8. The use, as claimed in one or more preceding claims 4-7, as a melt adhesive for coating the reverse of sheetlike textile structures.

9. The use as claimed in one or more preceding claims 4-8, wherein it is used for bonding, laminating, fixing, and coating sheetlike textile structures (carpets, artificial turf, mattress covers, spring pockets, diapers, nonwovens).

## Revendications

1. Adhésif thermofusible prêt à l'emploi contenant au moins 95 % en poids d'une ou de plusieurs cires de copolymère de polyoléfine, qui ont été fabriquées à l'aide de catalyseurs métallocènes, la cire de copolymère de polyoléfine étant constituée de propylène et d'un ou de plusieurs autres monomères choisis parmi l'éthylène et les 1-alcènes ramifiés ou non ramifiés de 4 à 20 atomes C, et la teneur en unités structurales provenant de propylène dans les cires de copolymère étant de 80 à 99,9 % en poids, et l'adhésif thermofusible présentant une tension de surface de la masse fondue, mesurée à une température de 170 °C, d'au plus 23 mN/m, **caractérisé en ce que** la cire de copolymère de polyoléfine
- contient des unités de propylène et d'éthylène, et
- la teneur en unités structurales provenant de propylène est comprise entre 85 et 95 % en poids, et
- la ou les cires de copolymère de polyoléfine présentent une masse molaire moyenne en nombre Mₙ dans la plage allant de 15 000 à 25 000 g/mol et une masse molaire moyenne en poids M_{w} dans la plage allant de 25 000 à 35 000 g/mol,
- un point d'égouttement ou de ramollissement anneau/bille dans la plage allant de 100 à 120 °C,
- une chaleur de fusion d'au plus 60 J/g, une viscosité à l'état fondu, mesurée à une température de 170 °C, de 8 000 à 15 000 mPa.s, et
- une température de transition vitreuse d'au plus - 15 °C,
et l'adhésif thermofusible présentant une plage de température d'élasticité entropique ΔT_{élasticité ent}. (tan δ), mesurée en tant que différence entre la température de transition vitreuse T_{g} (tan δₘₐₓ) à partir du facteur de perte et la température de ramollissement (début du module de perte tan δ_{début}) de 80 à 110 °C, et une chaleur de fusion dans la plage allant de 40 à 60 J/g, une viscosité à l'état fondu, mesurée à une température de 170 °C, comprise entre 8 000 et 11 000 mPa.s, une température de transition vitreuse d'au plus -20 °C.

2. Adhésif thermofusible prêt à l'emploi selon la revendication 1, **caractérisé en ce que** celui-ci est fabriqué directement dans le réacteur de polymérisation sans mélange supplémentaire et est fabriqué en utilisant plusieurs cires de polyoléfine différentes en tant que mélange de réacteur.

3. Adhésif thermofusible prêt à l'emploi selon la revendication 1 et/ou 2, **caractérisé en ce que** celui-ci contient en outre une ou plusieurs substances choisies parmi les plastiques de polyoléfine, les résines, les cires, les plastifiants, les polymères polaires ou apolaires, les pigments, les charges, les stabilisateurs et les antioxydants en quantités additives.

4. Utilisation de l'adhésif thermofusible prêt à l'emploi selon l'invention, selon une ou plusieurs des revendications 1 à 3 précédentes, pour le collage et la stratification et la fixation de substrats « de faible énergie de surface » ayant une énergie de surface < 30 mN/m.

5. Utilisation selon la revendication 4, **caractérisée en ce que** les cires de polyoléfine sont contenues dans les adhésifs thermofusibles en proportions comprises entre 95 et 100 % en poids.

6. Utilisation selon la revendication 4 et/ou 5, **caractérisée en ce que** la cire de polyoléfine ou les cires de polyoléfine correspondent à la composition thermofusible prête à l'emploi.

7. Utilisation selon une ou plusieurs des revendications 4 à 6 précédentes, **caractérisée en ce que** celui-ci est utilisé en tant que liant pour la fabrication de signalisations routières.

8. Utilisation selon une ou plusieurs des revendications 4 à 7 précédentes, en tant que colle thermofusible pour le revêtement de l'arrière de structures textiles plates.

9. Utilisation selon une ou plusieurs des revendications 4 à 8 précédentes, **caractérisée en ce que** celui-ci est utilisé pour le collage, la stratification, la fixation et le revêtement de structures textiles plates (tapis, gazons synthétiques, housses de matelas, sachets de ressorts, couches, non-tissés).
